# EUROPÄISCHE PATENTANMELDUNG

(11) **EP 2 028 234 A2**
(43) Veröffentlichungstag der Anmeldung: **25.02.2009**
(21) Anmeldenummer: 08009596.1
(22) Anmeldetag: 27.05.2008
(51) Int. Cl.: C08L 95/00

(54) **Verwendung eines Haftvermittlers für Fasern, insbesondere zu deren Einbringung in Bitumen aufweisende Massen**

(30) Priorität: 10.06.2007 DE 102007027306
(71) Anmelder: DEUTAG GmbH & Co. KG, 53545 Linz am Rhein (AT); Evonik Goldschmidt GmbH, 45127 Essen (DE)
(72) Erfinder: Ballandis, Jürgen, 45277 Essen (DE); Holthoff, Hubert, 44869 Bochum (DE); Nölting, Matthias, 22589 Hamburg (DE); Riebesehl, Gerhard, 21039 Escheburg (DE)
(74) Vertreter: Kassner, Klaus

(57) **Zusammenfassung**

Zur umfassenden Benetzung von Fasern mit einem Haftvermittler, wie z.B. in Faserstoffpellets, und Verbesserung der Haftung von Fasern zu Mischungsbestandteilen, wie z.B. zu Gesteinen in Bitumen aufweisende Massen, wird ein Haftvermittler verwendet, der aus den kationaktiven, den anionaktiven Produkten, den nichtionischen, den Ampholyten, den Betainen und den hydrophyle oder hydrophobe Gruppen aufweisenden Tensiden ausgewählt ist.

## Beschreibung

### Technisches Gebiet

Allgemein betrifft die Erfindung die Verwendung eines Haftvermittlers für Fasern zu deren beliebiger Weiterverarbeitung, um deren Haftfähigkeit zu verbessern.

Die Erfindung betrifft insbesondere die Verwendung eines Haftvermittlers für Fasern, wie auch Fasern in Faserstoffpellets, zu deren Einbringung in Bitumen aufweisende Massen, wie als Zuschlagstoff für Asphaltmischgüter, insbesondere Splittmastixasphalt, offenporige Asphaltdeckschichten (OPA, auch ZWOPA) und/oder hochstandfeste Asphaltbinder für Straßenbeläge, so auch Asphaltbetone oder Asphalttragschichten. Die Erfindung durchdringt die Verfahren zur Einbringung der Fasern wie auch Faserstoffpellets in derartige Massen und verbessert deren Eigenschaften bis hin zu deren eingebrachten Zustand wie als Straßenbelag.

Im weiteren Sinne dazu betrifft die Erfindung die Verwendung eines Haftvermittlers für Fasern bei der Herstellung von Bitumenmassen, die mit Füllfasern stabilisiertes Bitumen umfassen, wie z.B. auch als Anstrichstoffe

### Stand der Technik

Bekannt ist, daß ausgewählte Fasern wie in Faserstoffpellets , vorzugsweise Cellulosefasern oder sonstige organische Rohfasern, wie Papier-, Jute-, Hanf-, Sisal-, Flachs-, Textil-und/oder Holzfasern und ggf. mit Anteilen mindestens eines Bindemittels, auch als Haftvermittler, für eingangs genannte Gebiete Verwendung finden.

Die Fasern werden zu so genannten Pellets verpreßt, wobei eine Menge von Pellets ein aus formstabilen Teilen bestehendes Schüttgut bildet, welche Menge oben benannten Bitumen aufweisenden Massen in definierten Mengen zugegeben werden.

Soweit derartige Bitumen aufweisende Massen eingangs näher beschriebene Asphaltmischgüter im weiteren Sinne darstellen, werden diese nach den technologisch bestimmten Mischphasen, wie Vor-, Naß-, und Nachmischphasen hergestellt.

Derartige Technologien, auch zur Stabilisierung von Asphalten, sind schon gemäß US-A-2,507,639, DE-A-20 52 720, DE-B-19 36 922 und US-A-4,356,060 in vielfältigen Lösungen bekannt. Diesen ist gemeinsam, die Füllfasern in verschiedenen physikalischen Modifikationen bis hin zu granulatförmigen Preßlingen bzw. den so genannten Pellets zu binden.

Nach der Lehre der EP-B2-0 313 603 wurde daneben auch angestrebt, durch die Zugabe der Füllfasern in granulierter Form bereits von Anfang an eine Grobverteilung der Füllfasern in einem fließfähigen Bitumen zu erreichen. Die sich anschließende Feinverteilung sollte dann durch das in dem fließfähigen Bitumen sich auflösende Granulat erfolgen.

In der Praxis zeigte sich, daß die Auflösung innerhalb realer Mischzeiten im flüssigen Bitumen problematisch ist und die geltenden technischen Vorschriften zur Herstellung von Asphalten oder Splittmastixasphalten nicht eingehalten werden können.

In der Praxis hat sich bei der Herstellung von Asphalten oder Splittmastixasphalten nachhaltig bewährt, sowohl die normengerechte Taktfolge des Vormischens der Mineralien unter Zugabe von erforderlichen Zuschlagstoffen, des anschließenden Naßmischens unter Zugabe des Bindemittels wie Bitumen und abschließenden Nachmischens als auch die Zugabe von Zuschlagstoffen wie Pellets einzuhalten.

Es bestand andererseits in hohem Maße das Problem, nicht nur das eigentliche Mischgut zu stabilisieren, sondern dieses auch im eingebauten Zustand als Straßenbelag gegenüber dem rollenden, bremsenden, anfahrenden und stoppenden Verkehr widerstandsfähiger zu gestalten.

Deshalb wurde entsprechend der WO 99/11737 dem Bitumen oder Asphalt bzw. dem Straßenbelag ein Anteil von durch Fischer-Tropsch-Synthese gewonnenes Paraffin (FT-Paraffin) beigesetzt und im Verfahren zur Herstellung derartiger Straßenbeläge dieses FT-Paraffin zugemischt.

Eine wesentliche Weiterentwicklung erfolgte gemäß der EP 1 252 235 B1 in der komplexen Hinsicht, daß
a) in der Vormischzeit Pellets mit mindestens Anteilen von Cellulosefasern und FT-Paraffin den Mineralien zugegeben werden,
b) in der Vormischzeit die Pellets durch die mechanische, zerkleinernde Wirkung der Mineralien aufgerieben und dabei die Cellulosefasern mit dem FT-Paraffin in der Mineralmischung weitgehend verteilt werden,
c) im Ergebnis der Nachmischzeit durch die verbesserten rheologischen Eigenschaften des Bitumens im Mischgut die Widerstandsfähigkeit gegenüber plastischen Verformungen wie Spurrinnen im eingebauten Zustand des Mischgutes erhöht und der Verdichtungswiderstand bei der Verlegung des Mischgutes und Herstellung des Straßenbelages gesenkt werden und dabei
d) die Vor-, Naß- und Nachmischzeit je ca. 15s betragen bzw. die Gesamtmischzeit erheblich gesenkt wird.

Hierbei besteht das einzelne Pellet aus
a) ausgewählten Cellulosefasern oder sonstigen organischen Rohfasern, wie Papier-, Jute-, Hanf-, Sisal-, Flachs-, Textil- und/oder Holzfasern,
b) FT-Paraffin, welches den besagten Fasern anhaftet und mit diesen den Preßling durchsetzt und
c) diese Bestandteile zu sogenannten Pellets verpreßt sind, wobei
d) eine Masse von Pellets ein aus formstabilen Teilen bestehendes Schüttgut bildet, welches in der Vormischzeit der Mineralmischung zugegeben wird.

In Vollendung dieser bekannten und bewährten Lösung wird nun schon ein Asphaltmischgut erzeugt, welches im eingebauten Zustand
a) eine Reduzierung der Nadelpenetration von ≥ 25/10 mm aufweist,
b) hinsichtlich der Tieftemperaturzugfestigkeit um den Wert > 400 Kpa gestiegen ist,
c) bezüglich des Erweichungspunktes um ≥ 25°C zugenommen hat, so daß mindestens bei mehreren auszuwählenden Bitumensorten von Normenbitumen, wie B45, B65 oder B80 die Werte von Oxidationsbitumen vorliegen, wobei
d) einerseits die Widerstandsfähigkeit des als Straßenbelag eingebauten Mischgutes gegenüber Verformungen wie Spurrinnen zugenommen und der Verdichtungswiderstand beim einzubringenden Mischgut abgenommen hat und
e) andererseits die Temperatur des einzubringenden Mischgutes um 15°C - 20°C reduziert ist.

Neben diesem erreichten Stand der Technik tritt stets die Forderung auf, daß die Qualität der Asphalte noch weiter erhöht werden soll. Die möglichst vollständige Umhüllung oder Durchdringung der mitverwendeten Füllstoffe wie Fasern in Faserstoffpellets mit Haftvermittlern ist entwicklungsseitig noch nicht abgeschlossen.

Nachteilig in komplexer Sicht ist, und zwar den technologischen Prozeß von der Bereitstellung der Fasern/Faserstoffpellets, über deren Zugabe in oben näher definierte bituminöse Massen sowie deren Vermischung und bis hin zu einer als Straßenbelag eingebauten Decke betreffend, daß
- einerseits die Gesteine je nach ihrer geologisch-mineralischen Struktur in den Gemischen unterschiedliche haftkritische Wirkungen zu einem Bitumen entwickeln, die im wesentlichen von ihrer Rauhigkeit und/oder ihren sauren oder basischen Eigenschaften bestimmt werden,
- andererseits die Bitumenarten originär unterschiedliche Hafteigenschaften aufweisen und
- darüber hinaus im Straßenbau die Forderung besteht, den an sich von Natur aus dunklen wie schwarzen Asphalt mit hellen Gesteinen aufzuhellen, welche Gesteine wiederum besagte haftkritische Eigenschaften aufweisen können und
- auch bituminöse Massen in bestimmten technologischen Zwischenstufen Gefahrengüter darstellen können.

Hier setzen die Überlegungen zur Erfindung an, eine den komplexen technologischen Prozeß (von der Bereitstellung/Herstellung der Fasern/Faserstoffpellets, über deren Zugabe in oben näher definierte bituminöse Massen sowie deren Vermischung und bis hin zu einer als Straßenbelag eingebauten Decke) durchdringende Lösung für ein Haftvermittler im Sinne einer verbesserten Haftung der Fasern zu finden, die den unterschiedlichen haftkritischen Eigenschaften der Mischungsbestandteile gerecht wird und diese nachteiligen Eigenschaften im eingebauten oder verarbeiteten Zustand der Bitumen aufweisenden Masse weitgehend aufhebt.

### Darstellung der Erfindung

Die Erfindung stellt sich - ausgehend von der gesicherten Erkenntnis und Forderung, daß Haftmittel die Gebrauchseigenschaften von bituminösen Bindemitteln verbessern können- die Aufgabe, Haftmittel als Haftvermittler so zu verwenden, daß
- die Füllstoffe Fasern, wie in Faserstoffpellets, umfassend benetzt und/oder umhüllt werden und dafür geeignete Haftvermittler zu verwenden, die außerhalb bisheriger Anwendungen liegen,
- die nachteiligen Aspekte, daß einerseits die Mischungsbestandteile wie Gesteine je nach ihrer geologisch-mineralischen Struktur in den Gemischen unterschiedliche haftkritische Wirkungen zu einem Bitumen entwickeln, die im wesentlichen von ihrer Rauhigkeit und/oder sauren oder basischen Eigenschaften bestimmt werden, andererseits die Bitumenarten originär unterschiedliche Hafteigenschaften aufweisen und darüber hinaus im Straßenbau die Forderung besteht den an sich von Natur aus dunklen wie schwarzen Asphalt mit hellen Gesteinen aufzuhellen, welche Gesteine wiederum besagte haftkritische Eigenschaften besitzen, weitgehend beseitigt sind und
- eine den komplexen technologischen Prozeß (von der Bereitstellung/Herstellung der Fasern/Faserstoffpellets, über deren Zugabe in oben näher definierte bituminöse Massen sowie deren Vermischung und bis hin zu einer als Straßenbelag eingebauten Decke) durchdringende Lösung zu finden, die den unterschiedlichen haftkritischen Eigenschaften der Mischungsbestandteile gerecht wird und diese im eingebauten oder verarbeiteten Zustand weitgehend aufhebt.

Erfindungsgemäß ist im Ergebnis der Gesamtbetrachtung der aus den Ansprüchen 1 bis 30 entnehmbaren Merkmale der Erfindung gesichert, daß diese Haftvermittler innerhalb der üblichen Zusatzmengen die Grenzflächenspannung Bindemittel/Wasser erniedrigen und die Voraussetzung für die Spreitung, d. h. in diesem Fall das Auseinanderlaufen des flüssigen Stoffes Bitumen in der Mischung schaffen.

Es werden mit der Erfindung sowohl die Gebrauchseigenschaften von Bitumen aufweisenden Massen schlechthin als auch speziell die Gebrauchseigenschaften von Asphaltmischgütern hinsichtlich ihrer besseren Performance und Haltbarkeit in einem Asphaltbauwerk wie Straßenbelag positiv beeinflußt.

Somit beginnt die Wirkung der Erfindung auch schon bei derartigen bituminösen Massen, die mit Füllfasern stabilisiertes Bitumen umfassen und z.B. als Anstrichstoffe verwendet werden.

Die Erfindung trägt außerdem dazu bei, daß die Gefahrenklasse der verschiedenen als Haftverbesserer einsetzbaren Haftmittel absenkbar wird. Dies ist dadurch gesichert, daß das jeweilige Haftmittel (einige dieser Substanzen sind mindestens als reizend eingestuft) mit einer fast zehnfachen Masse von unschädlichen Cellulosefasern verdünnt wird.

Gemäß der Aufgabenstellung werden die Benetzungseigenschaften verbessert, d. h., daß bei entsprechender Bindemittel(Bitumen)viskosität im Verlauf des Benetzungsvorganges Poren und Kapillaren im Bereich der Oberflächen der Mineralien/Gesteine einer Mischung wie Asphalte miterfaßt werden. Auf diese Weise wird der Bindemittelfilm in den Oberflächenrauhigkeiten besser verankert und gegen Abrieb unempfindlicher. Die Überprüfung der Hafteigenschaften kann durch übliche Verfahren, z.B. durch die in EN 12 697-11 beschriebene Methode bestimmt werden.

Die Erfindung bewirkt neben den grenzflächenaktiven Eigenschaften des Haftvermittlers auch derartige chemische Reaktionen, daß dieser Haftvermittler auf Grund seines polaren Charakters und seiner speziellen Struktur unter bestimmten Voraussetzungen mit Oberflächen der Mischungsbestandteile chemisch reagiert. Dabei wird der polare Teil des Haftmittelmoleküls von der Feststoffoberfläche gebunden, wodurch beachtliche Bindungskräfte entstehen, die wesentlich größer sind als die in bisher bekannten Mischungen nur üblichen physikalischen Adsorptionskräfte.

Die an den Mineralien der Mischung wie Asphalte haftende, nachteilige Feuchtigkeit, die fast ausschließlich adsorptiv an den Oberflächen gebunden ist, wird durch den erfindungsgemäß verwendeten Haftvermittler infolge seiner hohen Affinität verdrängt. Die Gesteinsoberfläche wird dabei umbenetzt, d. h. aus einer hydrophilen wird eine oleophile Oberfläche. Übertragen auf die hiesige, zu lösende Problematik wird damit die Benetzbarkeit der Mineralien durch das Bitumen als ölartige Substanz wesentlich erhöht.

Die eingesetzten Haftvermittler wirken aber nicht nur als Adhäsionsverbesserer, sondern verbessern auch die rheologischen Eigenschaften von Mischungen mit Straßenbaubitumen und unterstützen die Einbauwilligkeit und Verdichtbarkeit von Heißmischgut. Durch das Erhöhen der Verlauf- und Netzeigenschaften von z. B. mastixähnlichen Vergußmassen wird die Alterungsneigung eingebauter bituminöser Massen verringert.

Somit erschließt die Erfindung die Lösung der oben analysierten, komplexen Aufgabenstellung, indem erfindungsgemäß nicht nur ein Haftvermittler für Fasern wie in Faserstoffpellets und deren Verwendung für Bitumen aufweisende Massen schlechthin gefunden wurde. Vielmehr werden auch mittels der Erfindung die Verfahren zur Einbringung der Fasern wie Faserstoffpellets in Bitumen aufweisende Massen synergistisch beeinflußt, wobei die Bitumen aufweisende Masse von vornherein schon verbesserte rheologische Eigenschaften erfährt.

Ein derartig ausgeführtes und von der Erfindung durchdrungenes bituminöses Mischgut verbessert schließlich auch dessen Eigenschaften im eingebrachten Zustand als Straßenbelag hinsichtlich seines Widerstands gegenüber dem rollenden Verkehr und seiner Alterungsneigung. Die Alterungsneigung kann durch gängige Spurbildungstests nachgewiesen werden, so z.B. durch den so genannten Hamburg-wheel-tracking-Test. Weitere Tests sind im später beschriebenen Ausführungsbeispiel dargestellt.

Damit umfaßt die Erfindung den technologisch und logistisch durchgängigen, einheitlichen Bereich von der Herstellung der Fasern mit Haftvermittlern, über deren Zugabe - auch als Pellets - in Bitumen aufweisende Massen mit verbesserten rheologischen Eigenschaften bis hin zur Einbringung dieser Massen für den jeweiligen Einsatzzweck, wie z. B. als Straßenbelag. Im Ergebnis werden höhere Gebrauchseigenschaften in neuartiger Weise und mit überraschenden Wirkungen erzielt, die zu einer einheitlichen, folgerichtigen Gesamtwirkung in einem z. B. bituminösen Straßenbelag verschmelzen.

Die Erfindung setzt analytisch und nicht naheliegend dabei an, einen Haftvermittler als Adhäsionsverbesserer aus der Gruppe der grenzflächen- oder kapillaraktiven Stoffe, den so genannten Tensiden, zu suchen. Derartige Stoffe sind in der Lage, auf Grund ihrer Molekülstruktur sich in Phasengrenzflächen wie in dem überraschend neu erschlossenen Bereich der Bestandteile eines bituminösen Mischgutes anzureichern und auf diese Weise die Grenzflächenspannung an den mineralischen Komponenten wie Gesteinen zu verändern.

Es wurde aber auch herausgefunden, daß die besonderen Eigenschaften des erfindungsgemäßen Haftvermittlers sich aus der Kombination von hydrophoben bzw. lipophilen Gruppen innerhalb eines Moleküls ergeben. Werden sie z. B. Bitumen zugesetzt, so ist die hydrophobe Gruppe in der öligen Phase des Bindemittels gut löslich, während die hydrophile Gruppe nur schlechte Löslichkeit aufweist. In der Folge tritt eine Anreicherung in der Bitumenoberfläche ein. Das kann auch für bituminöse Massen wie als Anstrichstoffe Bedeutung erlangen.

Aus den handelsüblichen Haftmitteln können deshalb Haftvermittler ausgewählt und eingesetzt werden, die überwiegend kationaktiven Charakter besitzen. Die polaren Gruppen dieser Produkte enthalten meist Stickstoff. Daneben sind aber auch Haftmittel mit anionaktiven Eigenschaften, wie beispielsweise die Metallseifen, einsetzbar.

Erfindungsgemäß wurde durch Versuche nachgewiesen, daß als Haftvermittler im Sinne der Aufgabenstellung und des Lösungsgedankens folgende Gruppen zur Anwendung geeignet sind, so insbesondere auch neutral reagierende Handelsprodukte, womit die vorliegende Aufgabe gelöst werden kann:
Als Haftvermittler für Fasern, insbesondere Fasern in Faserstoffpellets, als mindestens ein Zuschlagstoff für Bitumen aufweisende Massen, bituminöse Mischgüter oder Asphaltmischgüter, insbesondere Splittmastixasphalt, offenporige Asphaltdeckschichten (OPA, auch ZWOPA genannt) und hochstandfeste Asphaltbinder für Straßenbeläge, wie Asphaltbetone oder Asphaltragschichten wird den Fasern mindestens ein Haftvermittler, ausgewählt aus den kationaktiven, den anionaktiven Produkten, den nichtionischen, den Ampholyten, den Betainen und den hydrophyle oder hydrophobe Gruppen aufweisenden Tensiden zugesetzt, welcher die Fasern vorzugsweise umfassend benetzt, durchsetzt und/oder umhüllt.
Kationaktive Produkte können als Haftvermittler vorzugsweise solche der allgemeinen Formeln

   R¹-N⁺(CH3)₂-O⁻ (I),

   R¹-NR₃⁺ A⁻ (II),

   R¹-PR ₃⁺ A⁻ (III)

   oder

   R¹-SR₂⁺A⁻ (IV)

   sein, worin R gleich oder verschieden H oder ein Kohlenwasserstoffrest, R¹ ein organischer Rest und A ein ein- oder mehrwertiges Anion ist, welches letztere aus Cl⁻, SO₄²⁻, HOSO₃⁻, CH₃OSO₃⁻, PO₃²⁻ und OPO₃²⁻ ausgewählt werden kann. Demgemäß kann der Haftvermittler als ein kationenaktives Produkt aus Fettaminen, Imidazolidinen, Polyaminen, N-beta-Aminoethylalkylimidazoline und/oder deren Salze und/oder deren quartären Ammoniumverbindungen, Fettsäuren, Bi(silylpropyl)polysulfane, Fettmonoaminen, Fettpolyaminen, Fettamido(poly)aminen, Polyalkylenpolyaminen, Polyetheraminen, Polyetheramiden, Poliminen, Alkyl-Imidazolinen, Alkyl-Imidazolinaminen, Pyrimidinen, Pyridiniumsalzen, Piperazinen, Pyridinen, Morpholinen, quaternären Ammoniumverbindungen, alkoxylierte N-Verbindungen, insbesondere Fettsäurealkanolamine sowie die entsprechenden primären, sekundären, tertiären, quartären Ammonium-Salze und/oder quartären Ammoniumverbindungen, salzen von Aminoxiden, Silikontensiden oder Sulfoniumsalzen ausgewählt werden..
Wenn der Haftvermittler ein anionaktives Produkt ist, gelten die allgemeinen Formeln

   R²-COO⁻Kat (V),

   R²-SO₃⁻Kat⁺ (VI),

   R²-OSO₃⁻Kat⁺ VII),

   R²-PO₃²⁻Kat⁺ (VIII)

   oder

   R²-OPO₃²⁻Kat⁺ (IX),

   worin Kat⁺ ein ein- oder mehrwertiges Kation, vorzugsweise NA, K oder NH₄ und R² ein organischer Rest, vorzugsweise ein substituierter oder unsubstituierter Alkyl-, Cycloalkyl-und/oder Arylrest ist. Dabei kann das anionaktive Produkt aus Carboxylaten, Sulfaten, Phosphiten, Phosphonaten, Phosphinaten und Thiosulfaten ausgewählt werden.
Zur Verwendung eines Haftvermittlers im Sinne des erfinderischen Hauptgedankens kann der Haftvermittler ein aus den Montanwachsen, Fettsäurealkanolaminen, Fettsäurealkanolamiden, Polyglykolethern, Polyglykolestern, Polyglykolamiden, Polypropylenglykolethern oder Polyaminen ausgewähltes Produkt eingesetzt werden.
Weiterhin können als Haftvermittler für Fasern Ampholyte oder Betaine, ausgewählt aus Amphoacetaten, Amphopropionaten, Aminoxiden oder Sulfobetainen, eingesetzt werden.
Darüber hinaus werden erfindungsgemäß als Haftvermittler Tenside mit hydrophilen-und hydrophoben Gruppen, ausgewählt aus Dicarboxylaten, Sulfobernsteinsäureestern, Perfluortensiden, Silicontensiden oder Block-Copolymeren, eingesetzt.
Es ist für die Haftvermittler günstig, daß die Fasern eine jegliche Form von Agglomeration wie auch eine flockige Form aufweisen können, wobei sie Cellulosefasern, organische Rohfasern, Papier-, Jute-, Hanf-, Sisal-, Flachs-, Textil- und/oder Holzfasern umfassen.
Technologisch vorteilhaft werden die Fasern mindestens zum letztmöglichen Zeitpunkt in einer dem Bestandteil des Haftvermittlers relevanten "Heißphase" der zu mischenden bituminösen Masse in mindestens einem der Verfahrensschritte, wie Vor-, Naß- und Nachmischzeit dem jeweiligen Mischgut zugegeben.
Erfindungswesentlich ist, daß mittels dieser Fasern mit dem vom Haftvermittler wirkenden Anteil zwischen den Bestandteilen der bituminösen Masse, Mischgüter oder Asphaltmischgüter, insbesondere Splittmastixasphalt, offenporige Asphaltdeckschichten (OPA, auch ZWOPA) und hochstandfeste Asphaltbinder für Straßenbeläge die Affinität des Bitumens zu den Mineralien hergestellt wird, wobei das Bitumen und das Gestein im jeweiligen Mischgut Eigenschaften aufweisen, die entweder bitumenseitig zu verbesserten Hafteigenschaften oder gesteinsseitig zur Unwirksamkeit der Rauhigkeit und/oder sauren oder basischen Eigenschaften führen. Neben den physikalischen Bindungskräften werden zwischen den Mischungsbestandteilen Bindungskräfte durch chemische Reaktionen erreicht.
Mittels dieser erfindungsgemäßen Fasern wird mit dem vom Haftvermittler wirkenden Anteil die Spaltzugfestigkeit im Mischgut, wie in der bituminösen Masse, den Mischgütern oder Asphaltmischgütern, insbesondere Splittmastixasphalten, offenporigen Asphaltdeckschichten (OPA, auch ZWOPA) und hochstandfesten Asphaltbindern für Straßenbeläge erhöht.
Bei der Verwendung eines Haftvermittlers für Fasern, die zu einem Pellet verpreßt sind, wobei in der Praxis eine Masse von Pellets ein aus formstabilen Teilen bestehendes Schüttgut bilden kann, welches der bituminösen Masse, dem bituminösen Mischgut oder dem Asphaltmischgut, insbesondere dem Splittmastixasphalt, den offenporigen Asphaltdeckschichten (OPA, auch ZWOPA) und hochstandfesten Asphaltbindern für Straßenbeläge in einer ausgewählten Mischphase und/oder ausgewählten Mischzeit in einer ausgewählten Dosierung zugegeben wird, können die mit dem Haftvermittler umschlossenen, durchsetzten oder angereicherten Fasern oder diese als Faserstoffpellets verpreßt zusammen mit einem Zuschlagstoff, Füller, Bindemittel wie Bitumen oder den Mineralien dem Mischvorgang zugegeben werden.
Der Haftvermittler wird im Allgemeinen dem jeweiligen Mischgut vorzugsweise bei einer Temperatur bis zu 300 °C zugegeben. Im Mischgut beträgt die Einsatzmenge des Haftvermittlers vorzugsweise 0,1 - 5,0 Gew.-% Anteile, bevorzugt 0,1 - 2,5 Gew.-% Anteile und besonders bevorzugt 0,1 - 1,0 Gew.-% Anteile bezogen auf den Bitumenanteil.
Bei einem Mischgut mit recyceltem Ausbauasphalt kann die Einsatzmenge des Haftvermittlers bevorzugt 0,1 - 1,0 Gew.-% Anteile bezogen auf den in einem Ausbauasphalt enthaltenen Bindemittelanteil betragen.
Zweckmäßig weist der Haftvermittler vorzugsweise eine Viskosität von 100 bis 500 mPas, bevorzugt von 150 bis 250 mPas, besonders bevorzugt von 180 bis 220 mPas und insbesondere von ca. 200 mPas auf.
Wichtig ist, daß der Haftvermittler eine Raumtemperatur **bzw. spezifische** Verarbeitungstemperatur besitzt.

Bevorzugte Haftvermittler weisen einen Flammpunkt von > 100 °C auf. Besonders bevorzugt eingesetzte Haftvermittler sind thermisch stabil bis zu einer Temperatur von vorzugsweise mindestens 200 °C, bevorzugt bis zu einer Temperatur zwischen 200 und 300°C.

Die Dichte sollte ca. 0,94 g/cm³ sowie die Aminzahl 430 mg KOH/g bei Einstellung der Stabilität auf die Verarbeitungstemperatur betragen.

Ist der Haftvermittler mittelviskos, weist er eine Säurezahl von < 12, eine Aminzahl von ca. 380 mg KOH/g und einen Wassergehalt von < 2 % zur Anwendung in Heiß- und/oder Mixbitumen auf, in ausgewählten Fällen wie bei Verwendung kationischer Bitumenemulsionen besitzt er eine Säurezahl von < 10, eine Aminzahl von ca. 1000 mg KOH/g und einen Wassergehalt von < 2 %. Bei Verwendung in Mischgütern mit sauren Bestandteilen wie Mineralien weist der mittelviskose Haftvermittler eine Säurezahl von ca. 35, eine Aminzahl von ca. 150 mg KOH/g und einen Wassergehalt von < 2 % auf.

Der erfindungsgemäße Haftvermittler kann unter bestimmten Voraussetzungen die Funktion eines ggf. im Pellet vorgesehenen Bindemittels wie auch Wachs oder Bitumen mindestens zu einem Anteil zwecks Reduzierung des Bindemittelanteils bis zu dessen Ersatz übernehmen.

Zur Erläuterung der Wirksamkeit der kationaktiven Haftvermittler, die N-Gruppen enthalten, sei herausgestellt, daß die aus dem Haftvermittler resultierenden Eigenschaften ursächlich von den pro Molekül vorhandenen primären, sekundären und tertiären N-Gruppen bzw. dem Anteil an ringförmig gebundenem Stickstoff bestimmt werden.

Überraschend dabei war, daß die Normalwirksamkeit des erfindungsgemäßen Haftvermittlers, d. h. die für eine vollkommene Bitumenumhüllung erforderliche Mindesthaftmittelmenge, mit steigenden Anteilen an primären und sekundären N-Gruppen bestimmt wurde. Dabei ergab sich, daß dies mit den am Stickstoff gebundenen H-Atomen zusammenhängt, welche aufgabengemäß reaktionsfreudig und leicht mit den Oberflächen des sauren Gesteinscharakters (Silikate) zu chemischen Verbindungen zusammentreten.

Andererseits wurde die Erkenntnis genutzt, daß tertiäre N-Gruppen und ringförmig gebundener Stickstoff wesentlich reaktionsträger sind. Substanzen, die ausschließlich solche Verbindungen enthalten, haben als Haftvermittler geringere Normalwirksamkeit, gleichzeitig aber wächst durch solche Gruppierungen die Resistenz der grenzflächenaktiven Produkte gegenüber dem Angriff reaktionsfähiger Bindemittelkomponenten im Materialgemisch des bituminösen Mischgutes.

Schließlich ergab sich aus den Versuchsreihen mit Haftvermittlern aus den kationaktiven Haftmitteln, daß diese in Gegenwart von Wasser bituminöse Bindemittel positiv aufladen. Daraus ergab sich wiederum, daß eine haftverbessernde Wirkung, d. h. ein Aufziehen des Bindemittels auf nasse Gesteinsoberflächen, besonders dann zu erwarten ist, wenn die betreffenden Gesteinsoberflächen entgegengesetzte Ladung aufweisen — wenn sie also negativ sind.

Mit diesen erfindungsgemäßen Haftvermittlern, die das oben genannte komplexe technologische Einsatzgebiet mit den jeweils spezifisch eigenen Wirkungen durchdringen, erschließen sich für das Endprodukt, so z. B. bituminöse Straßenbeläge, neue Qualitäten an Gebrauchseigenschaften.

Es erschließen sich darüber hinaus weitere Verwendungsmöglichkeiten der Erfindung für bisher im Stand der Technik bekannte Verfahren wie im Folgenden offenbart:
So kann der Haftvermittler in einem Verfahren zur Herstellung von Bitumenmassen eingesetzt werden, die mit Füllfasern stabilisiertes Bitumen umfassen. Wenn dabei der Bitumen fließfähig gemacht und zum Einmischen der Füllfasern in dieses fließfähige Bitumen ein die Füllfasern umfassendes, sich in dem fließfähigen Bitumen auflösendes und die Füllfasern in dem fließfähigen Bitumen verteilendes Granulat verwendet wird, welches ein Bindemittel aufweist, das in fließfähigem Bitumen seine Bindungswirkung verliert, und zwar hauptsächlich durch Temperatureinfluß und gleich in welcher Mischphase, kann ebenfalls die erfindungsgemäße Wirkung eintreten, wie zuvor herausgestellt.
Des weiteren kann der Haftvermittler in einem Verfahren zur Herstellung von Bitumen aufweisende Massen, bituminöse Mischgüter oder Asphaltmischgüter, insbesondere Splittmastixasphalt, offenporige Asphaltdeckschichten und hochstandfeste Asphaltbinder für Straßenbeläge, wie Asphaltbetone oder Asphaltragschichten mit den erfindungsgemäßen Effekten verwendet werden, bei dem Anteile von durch Fischer-Tropsch-Synthese gewonnenes Paraffin zugemischt wurden. Dies auch dann, wenn die Phasen Vormischen, Naßmischen und/oder Nachmischen ablaufen, wobei die Zuschlagstoffe als Trägersubstanz für Fischer-Tropsch-Paraffin ausgestaltete Fasern sind, die auch als Preßlinge formbar sind, und die in eine der Phasen Vormischen, Naßmischen und/oder Nachmischen zugegeben werden. Dabei sollten in mindestens einem Mischvorgang durch die mechanische, zerkleinernde Wirkung der Mineralien diese Fasern aufgerieben und weitgehend im Mischgut verteilt werden.
Schließlich ist auch die Verwendung eines erfindungsgemäßen Haftvermittlers für Fasern denkbar, wo der Haftvermittler in einem Verfahren zur kombinierten Verwendung eines Systems von einem Weichmacher und einem Härter, welches System einer jeweiligen Mischung mit Ausbauasphalten zugegeben wird, eingesetzt wird.

### Bester Weg zur Ausführung der Erfindung

Anhand eines technologisch untersuchten Ausführungsbeispiels wird bei der Herstellung von Asphaltmischgütern, insbesondere Splittmastixasphalten die Erfindung näher erläutert.

Hierbei sollte auch das Haftverhalten von haftkritischen wie basischen Gesteinen und Bitumen durch die Zugabe von mit erfindungsgemäßen Haftvermittlern modifizierten Faserstoffpellets an Hand von Referenzmischungen überprüft werden. Der Anteil des Haftvermittlers wurde bei Splittmastixasphalt mit einem Bindemittelgehalt von ca. 7 M.-% so gewählt, daß das Bitumen mit 0,2 M.-% Haftvemittler modifiziert war.

Die Mischgutzusammensetzungen für die Splittmastixasphalte 0/8 S erfolgten in Anlehnung an die Eignungsprüfungen 005506 00 (SMA 0/8 S mit Bitumen 50/70) und 008871 00 (SMA 0/8 S mit PmB 45 A).

Um der Aufgabenstellung entsprechend den Einfluss der Haftmittel modifizierten Faserpellets auf haftkritisches Gestein überprüfen zu können, wurden die lt. Eignungsprüfungen zu verwendenden Diabas bzw. Moräne Edelbrechsande und die Diabas Edelsplitte vollständig durch Grauwacke Edelbrechsand und Splitte ersetzt.

Für sämtliche Naßmischungen (mit Bitumen) wurde eine Chargengröße von 3,2 to, für die Trockenmischung (ohne Bitumen) eine Chargengröße von 2,2 to gewählt.

Gemäß der vorhandenen Anlagensteuerung erfolgte der Eintrag der jeweiligen Menge an Faserstoffpellets für die vorgenannten Mischgüter gemeinsam mit den Splittfraktionen und der Brechsandkomponente. Die Füllerzugabe erfolgte um zwei Sekunden Zeit verzögert, der Bindemitteleintrag weitere zwei Sekunden später.

Für das Referenzmischgut (SMA mit Bitumen 50/70 und unmodifizierten Faserstoffpellets gemäß EPZ DEUTAG) sowie die erste Erprobungsvariante (SMA mit PmB 45 und unmodifizierten Faserstoffpellets gemäß EPZ DEUTAG) und die zweite Erprobungsvariante (SMA mit Bitumen 50/70, unmodifizierten Faserstoffpellets und 0,2 M.-% Haftvermittler bezogen auf den Bindemittelgehalt) wurden die Faserstoffpellets vollautomatisch aus dem Faserstoffsilo zugegeben.

Darüber hinaus wurde für die zweite Erprobungsvariante die auf die Chargengröße abgestimmte Haftvermittlermenge L300 über eine separate Zugabe in den Mischer verbracht. Die Haftvermittlermenge wurde so bemessen, dass das verwendete Bindemittel wie Bitumen mit 0,2% Haftmittel modifiziert wurde. Diese Zugabe erfolgte näherungsweise zeitgleich mit dem Beginn des Bindemitteleintrags.

Um eine ausreichend homogene Verteilung des Haftmittels im Mischgut zu garantieren, wurde die Nachmischzeit von 13 auf 18 Sekunden erhöht. Zur Schaffung identischer Voraussetzungen, wurde die verlängerte Nachmischzeit auch für die anderen Varianten übernommen.

Für die dritte Erprobungsvariante (SMA mit Bitumen 50/70 und mit Haftvermittler modifizierten Faserstoffpellets) und die vierte Erprobungsvariante (SMA ohne Bitumen 50/70 und mit Haftvermittler modifizierten Faserstoffpellets) erfolgte die Zugabe der mit Haftvermittler modifizierten Faserstoffpellets ebenfalls über eine separate Zugabe unmittelbar nach der Verbringung der Mineralstoffe in den Mischer.

Der Zeitpunkt der Zugabe wurde so festgelegt, daß die mit Haftmittler modifizierten Faserstoffpellets primär durch die Scherkräfte der Mineralstoffe während der Trockenmischphase aufgeschlossen werden.

Einen sekundären Beitrag zur Auffaserung liefern die zwar abgeminderten, aber immer noch vorhandenen Scherkräfte in der Nass-/Nachmischzeit sowie zusätzlich der thermische Einfluss der heißen Mineralstoffe und des Bindemittels.

Die Mischguttemperatur lag während der durchgeführten Versuchsreihen bei im Mittel 175°C.

Grundsätzlich kann davon ausgegangen werden, dass auch bei geringeren Mischguttemperaturen der Beitrag der "Sekundärauffaserung" durch heiße Mineralstoffe und Bindemittel in vollem Umfang gegeben ist.

Nach den Mischvorgängen wurden die besagten Varianten zunächst im Heißsilo gelagert, anschließend in die Radladerschaufel entleert und zur Beprobung auf einer Freifläche ausgebreitet.

An Hand des Rolling Bottle Tests nach DIN EN 1297-11 (an den in Anlehnung an die ALP A-SIB; Teil 10 vorbereiteten Mineralstoffen der Körnung 5/8 (8/11)) wurde geprüft und festgestellt, daß sich in gattungsgemäßen Mischgütern der eingangs umrissenen Arten das Haftverhalten des Bitumen durch die Zugabe von mit erfindungsgemäßen Haftvermittlern modifizierten Faserstoffpellets verbessert hat und die Mineralstoffe besser umhüllt sind.

Es ist in diesem Zusammenhang hervorzuheben, daß die vierte Erprobungsvariante (SMA ohne Bitumen 50/70 und mit Haftvermittler modifizierten Faserstoffpellets als Trockenmischgut) im Rolling Bottle Test auch an den durch Absiebung rückgewonnenen Mineralstoffen der Körnung 5/8 (8/11) und frischem Bindemittel ohne Haftvermittler durchgeführt wurde.

Die als Straßenbelag eingebrachten obigen Mischgutvarianten mit den mit erfindungsgemäßen Haftvermittlern modifizierten Faserstoffpellets zeigten als weiteren Effekt eine verbesserte Standfestigkeit, die nach den Regeln der Marshallstabilität gemäß DIN EN 1297-34 und von Spurbildungstests gemäß DIN EN 1297-22 bei 50°C mit Stahlrad im Wasserbad geprüft wurde.

Diese Ergebnisse wurden im Rahmen der Versuche im Vergleich zu oben angeführten Referenzmischgütern nachgewiesen.

Somit belegen die Varianten des Ausführungsbeispiels, daß der bestimmende Kern der Erfindung,
in einer der Phasen, wie Vormischen, Naßmischen oder Nachmischen, oder allgemein während des Mischens dem jeweiligen gattungsgemäßen Mischgut Fasern oder aus Fasern verpreßte Faserstoffpellets als mindestens ein Zuschlagstoff zugegeben, die einen Haftvermittler aufweisen, der aus den kationaktiven, den anionaktiven Produkten den nichtionischen, den Ampholyten, den Betainen und den hydrophyle oder hydrophobe Gruppen aufweisenden Tensiden ausgewählt ist,
zu dem aufgabengemäß angestrebten Erfolg führen.

Die Fasern können in einem technologischen Vorprozeß umfassend mit dem erfindungsgemäßen Haftvermittler benetzt, durchsetzt und/oder umhüllt werden, so z.B. schon während der Herstellung der Fasern oder Faserstoffpellets,

Es ist dem Fachmann in der Praxis überlassen, welche Haftvermittler er aus den offenbarten Produkten auswählt. Im Ergebnis der bei den Anmeldern gelaufenen Versuchsreihen werden empfohlen:
- Als kationaktive Produkte:
   ■ Redicote N-422, N-559,
   ■ Wetfib BE von Akzo oder
   ■ TEGO^{®} Addibit F4 HB oder Addibit L100 oder L200 der Goldschmidt GmbH;
- als anionaktive Produkte:
   Die im Anspruch 6 offenbarten Carboxylate, Sulfate, Phosphite, Phosphonate, Phosphinate und Thiosulfate;
- als nichtionische Produkte:
   Die im Anspruch 7 offenbarten Montanwachse, Fettsäurealkanolamine, Fettsäurealkanolamide, Polyglykolether, Polyglykolester, Polyglykolamide, Polypropylenglykolether oder Polyamine;
- als Produkte, wie Ampholyte oder Betaine:
   ■ TEGO^{®} Addibit EK 7A oder TEGO^{®} Addibit DS, bevorzugt TEGO^{®} Addibit WS 35 der Goldschmidt GmbH oder
   ■ Produkte der Caregroup;
- als Produkte, wie Tenside mit hydrophilen und hydrophoben Gruppen, ausgewählt aus Dicarboxylaten, Sulfobernsteinsäureestern, Perfluortensiden, Silicontensiden oder Block-Copolymeren, die von Caregroup, TEGO Chemie Service GmbH oder Goldschmidt GmbH hergestellten diesbezüglichen Produkte.

Die erfindungsgemäß präparierten Fasern können eine jegliche Form von Agglomeration wie auch eine flockige Form aufweisen und Cellulosefasern, organische Rohfasern, Papier-, Jute-, Hanf-, Sisal-, Flachs-, Textil- und/oder Holzfasern umfassen.

Die mit dem Haftvermittler umschlossenen, durchsetzten oder angereicherten Fasern oder diese als Faserstoffpellets verpreßte Fasern können zum letztmöglichen Zeitpunkt in einer der Eigenschaft des Haftvermittlers relevanten ,,Heißphase" des zu mischenden Gutes in mindestens einer der zuvor genannten Phasen oder Verfahrensschritte, wie Vor-, Naß- und Nachmischzeit dem jeweiligen Mischgut zugegeben werden. Dies ist auch möglich, wenn ein weiterer Zuschlagstoff, wie Füller, sowieso Bindemittel wie Bitumen oder den Mineralien dem Mischvorgang zugegeben wird.

Es wird mittels dieser Fasern mit dem vom Haftvermittler wirkenden Anteil zwischen den Bestandteilen des Mischgutes erreicht, daß die erfinderisch gewollt zu verbessernden Hafteigenschaften neben den physikalischen Bindungskräften zwischen den Mischungsbestandteilen auch Bindungskräfte durch chemische Reaktionen wirken.

Somit wird mit dem vom erfindungsgemäßen Haftvermittler wirkenden Anteil die Spaltzugfestigkeit im Mischgut für die mit dem Mischgut zu fertigenden Straßenbeläge erhöht.

### Gewerbliche Anwendbarkeit

Nach den intern durchgeführten Versuchen ist davon auszugehen, daß die Erfindung den technologisch und logistisch durchgängigen Bereich von der Herstellung der Fasern mit Haftverbesserern, über deren Zugabe in bituminöse Massen mit verbesserten rheologischen Eigenschaften bis hin zur Einbringung dieser Massen für den jeweiligen Einsatzzweck, wie z. B. als Straßenbelag, mit höheren Gebrauchseigenschaften durchdringen und mit neuen Qualitäten beeinflussen kann. Es wird auch möglich, die eingangs angesprochene Eigenschaft "Gefahrenklasse" verschiedener Haftmittel abzusenken.

## Patentansprüche

1. Verwendung eines Haftvermittlers für Fasern zu deren beliebiger Weiterverarbeitung, wobei den Fasern zur Verbesserung der Haftfähigkeit mindestens ein Haftvermittler, ausgewählt aus den kationaktiven, den anionaktiven Produkten, den nichtionischen, den Ampholyten, den Betainen und den hydrophyle oder hydrophobe Gruppen aufweisenden Tensiden zugesetzt wird, welcher die Fasern umfassend benetzt, durchsetzt und/oder umhüllt.

2. Verwendung eines Haftvermittlers für Fasern oder aus Fasern verpreßten Faserstoffpellets, als mindestens ein Zuschlagstoff für Bitumen aufweisende Massen, bituminöse Mischgüter oder Asphaltmischgüter, insbesondere Splittmastixasphalt, offenporige Asphaltdeckschichten (OPA, auch ZWOPA genannt) und hochstandfeste Asphaltbinder für Straßenbeläge, wie Asphaltbetone oder Asphaltragschichten,
**dadurch gekennzeichnet, daß** den Fasern als Haftverbesserer mindestens ein Haftvermittler, ausgewählt aus den kationaktiven, den anionaktiven Produkten den nichtionischen, den Ampholyten, den Betainen und den hydrophyle oder hydrophobe Gruppen aufweisenden Tensiden zugesetzt wird, welcher die Fasern umfassend benetzt, durchsetzt und/oder umhüllt.

3. Verwendung eines Haftvermittlers für Fasern nach Anspruch 1 oder 2, **dadurch gekennzeichnet, daß** der Haftvermittler ein kationaktives Produkt der allgemeinen Formeln
R¹-N⁺(CH3)₂-O⁻ (I),
R¹-NR₃⁺ A⁻ (II),
R¹-PR ₃⁺ A⁻ (III)
oder
R¹-SR₂⁺A⁻ (IV)
ist, worin R gleich oder verschieden H oder ein Kohlenwasserstoffrest, R¹ ein organischer Rest und A ein ein- oder mehrwertiges Anion ist.

4. Verwendung eines Haftvermittlers für Fasern nach einem der Ansprüche 1 bis 3, **dadurch gekennzeichnet, daß** der Haftvermittler eine kationenaktives Produkt der allgemeinen Formeln (I), (II), (III) oder (IV) ist, wobei der Rest A ein Anion, ausgewählt aus Cl⁻, SO₄²⁻, HOSO₃⁻, CH₃OSO₃⁻, PO₃²⁻ und OPO₃^{2-,} ist.

5. Verwendung eines Haftvermittlers für Fasern nach einem der Ansprüche 1 bis 2, **dadurch gekennzeichnet, daß** der Haftvermittler ein kationenaktives Produkt, ausgewählt aus Fettaminen, Imidazolidinen, Polyaminen, N-beta-Aminoethylalkylimidazoline und/oder deren Salze und/oder deren quartären Ammoniumverbindungen, Fettsäuren, Bi(silylpropyl)polysulfane, Fettmonoaminen, Fettpolyaminen, Fettamido(poly)aminen, Polyalkylenpolyaminen, Polyetheraminen, Polyetheramiden, Poliminen, Alkyl-Imidazolinen, Alkyl-Imidazolinaminen, Pyrimidinen, Pyridiniumsalzen, Piperazinen, Pyridinen, Morpholinen, quaternären Ammoniumverbindungen, alkoxylierte N-Verbindungen, insbesondere Fettsäurealkanolamine sowie die entsprechenden primären, sekundären, tertiären, quartären Ammonium-Salze und/oder quartären Ammoniumverbindungen, Salzen von Aminoxiden, Silikontensiden oder Sulfoniumsalzen, ist.

6. Verwendung eines Haftvermittlers für Fasern nach Anspruch 1 oder 2, **dadurch gekennzeichnet, daß** der Haftvermittler ein anionaktives Produkt der allgemeinen Formeln
R²-COO-Kat (V),
R²-SO₃⁻Kat⁺ (VI),
R²-OSO₃⁻Kat⁺ VII),
R²-PO₃²⁻Kat⁺ (VIII)
oder
R²-OPO₃²⁻Kat⁺ (IX)
ist, worin Kat⁺ ein ein- oder mehrwertiges Kation, vorzugsweise NA, K oder NH₄ und R² ein organischer Rest, vorzugsweise ein substituierter oder unsubstituierter Alkyl-, Cycloalkyl- und/oder Arylrest ist.

7. Verwendung eines Haftvermittlers für Fasern nach Anspruch 1 oder 2 und 6, **dadurch gekennzeichnet, daß** der Haftvermittler ein anionaktives Produkt, ausgewählt aus Carboxylaten, Sulfaten, Phosphiten, Phosphonaten, Phosphinaten und Thiosulfaten, ist.

8. Verwendung eines Haftvermittlers für Fasern nach Anspruch 1, **dadurch gekennzeichnet, daß** als Haftvermittler ein anionaktives Produkt, ausgewählt aus den Montanwachsen, Fettsäurealkanolaminen, Fettsäurealkanolamiden, Polyglykolethern, Arylpolyglykolethern, Polyglykolestern, Polyglykolamiden, Polypropylenglykolethern oder Polyaminen, eingesetzt werden.

9. Verwendung eines Haftvermittlers für Fasern nach Anspruch 1 oder 2, **dadurch gekennzeichnet, daß** als Haftvermittler Ampholyte oder Betaine, ausgewählt aus Amphoacetaten, Amphopropionaten, Aminoxiden oder Sulfobetainen, eingesetzt werden.

10. Verwendung eines Haftvermittlers für Fasern nach Anspruch 1 oder 2, **dadurch gekennzeichnet, daß** als Haftvermittler Tenside mit hydrophilen und hydrophoben Gruppen, ausgewählt aus Dicarboxylaten, Sulfobernsteinsäureestern, Perfluortensiden, Silicontensiden oder Block-Copolymeren, eingesetzt werden.

11. Verwendung eines Haftvermittlers für Fasern nach einem der Ansprüche 1 bis 10, **dadurch gekennzeichnet, daß** die Fasern eine jegliche Form von Agglomeration wie auch eine flockige Form aufweisen.

12. Verwendung eines Haftvermittlers für Fasern nach einem der Ansprüche 1 bis 11, **dadurch gekennzeichnet, daß** die Fasern Cellulosefasern, organische Rohfasern, Papier-, Jute-, Hanf-, Sisal-, Flachs-, Textil- und/oder Holzfasern sind.

13. Verwendung eines Haftvermittlers für Fasern nach einem der Ansprüche 2 bis 12, **dadurch gekennzeichnet, daß** die Fasern mindestens zum letztmöglichen Zeitpunkt in einer dem Bestandteil des Haftvermittlers relevanten "Heißphase" der zu mischenden bituminösen Masse in mindestens einem der Phasen oder Verfahrensschritte, wie Vor-, Naß- und Nachmischzeit dem jeweiligen Mischgut zugegeben werden.

14. Verwendung eines Haftvermittlers für Fasern nach einem der Ansprüche 2 bis 13, **dadurch gekennzeichnet, daß** mittels dieser Fasern mit dem vom Haftvermittler wirkenden Anteil zwischen den Bestandteilen der bituminösen Masse, Mischgüter oder Asphaltmischgüter, insbesondere Splittmastixasphalt, offenporige Asphaltdeckschichten (OPA, auch ZWOPA) und hochstandfeste Asphaltbinder für Straßenbeläge die Affinität des Bitumens zu den Mineralien hergestellt wird, wobei das Bitumen und das Gestein im jeweiligen Mischgut Eigenschaften aufweisen, die entweder bitumenseitig zu verbesserten Hafteigenschaften oder gesteinsseitig zur Unwirksamkeit der Rauhigkeit und/oder sauren oder basischen Eigenschaften führen und/oder die Eigenschaften neben den physikalischen Bindungskräften zwischen den Mischungsbestandteilen Bindungskräfte durch chemische Reaktionen aufweisen.

15. Verwendung eines Haftvermittlers für Fasern nach einem der Ansprüche 2 bis 14, **dadurch gekennzeichnet, daß** mittels dieser Fasern mit dem vom Haftvermittler wirkenden Anteil die Spaltzugfestigkeit im Mischgut, wie in der bituminösen Masse, den Mischgütern oder Asphaltmischgütern, insbesondere Splittmastixasphalten, offenporigen Asphaltdeckschichten (OPA, auch ZWOPA) und hochstandfesten Asphaltbindern für Straßenbeläge erhöht wird.

16. Verwendung eines Haftvermittlers für Fasern, die zu einem Pellet verpreßbar sind, wobei eine Masse von Pellets ein aus formstabilen Teilen bestehendes Schüttgut bildet, welches der bituminösen Masse, dem bituminösen Mischgut oder dem Asphaltmischgut, insbesondere dem Splittmastixasphalt, den offenporigen Asphaltdeckschichten (OPA, auch ZWOPA) und hochstandfesten Asphaltbindern für Straßenbeläge in einer ausgewählten Mischphase und/oder ausgewählten Mischzeit in einer ausgewählten Dosierung zugegeben wird, nach einem der Ansprüche 2 bis 15, **dadurch gekennzeichnet, daß** die mit dem Haftvermittler umschlossenen, durchsetzten oder angereicherten Fasern oder diese als Faserstoffpellets verpreßt zusammen mit einem Zuschlagstoff, Füller, Bindemittel wie Bitumen oder den Mineralien dem Mischvorgang zugegeben werden.

17. Verwendung eines Haftvermittlers für Fasern nach einem der Ansprüche 2 bis 16, **dadurch gekennzeichnet, daß** der Haftvermittler dem jeweiligen Mischgut bei einer Temperatur bis zu 300 °C zugegeben wird.

18. Verwendung eines Haftvermittlers für Fasern nach einem der Ansprüche 2 bis 17, **dadurch gekennzeichnet, daß** im Mischgut die Einsatzmenge des Haftvermittlers 0,1 - 1,0 Gew.-% Anteile bezogen auf den Bitumenanteil beträgt.

19. Verwendung eines Haftvermittlers für Fasern nach einem der Ansprüche 2 bis 17, **dadurch gekennzeichnet, daß** im Mischgut die Einsatzmenge des Haftvermittlers 0,1 - 1,0 Gew.-% Anteile bezogen auf den in einem Ausbauasphalt enthaltenen Bindemittelanteil beträgt.

20. Verwendung eines Haftvermittlers für Fasern nach einem der Ansprüche 1 bis 19, **dadurch gekennzeichnet, daß** der Haftvermittler eine Viskosität von ca. 200 mPas, einen Flammpunkt von > 100 °C, eine Dichte von ca. 0,94 g/cm³ sowie eine Aminzahl von 430 mg KOH/g bei Einstellung der Stabilität auf eine Verarbeitungstemperatur aufweist.

21. Verwendung eines Haftvermittlers für Fasern nach einem der Ansprüche 2 bis 19; **dadurch gekennzeichnet, daß** der Haftvermittler mittelviskos ist sowie eine Säurezahl von < 12, eine Aminzahl von ca. 380 mg KOH/g und einen Wassergehalt von < 2 % zur Anwendung in Heiß- und/oder Mixbitumen aufweist.

22. Verwendung eines Haftvermittlers für Fasern nach einem der Ansprüche 2 bis 19, **dadurch gekennzeichnet, daß** der Haftvermittler mittelviskos ist sowie eine Säurezahl von < 10, eine Aminzahl von ca. 1000 mg KOH/g und einen Wassergehalt von < 2 % bei Verwendung kationischer Bitumenemulsionen aufweist.

23. Verwendung eines Haftvermittlers für Fasern nach einem der Ansprüche 2 bis 19, **dadurch gekennzeichnet, daß** der Haftvermittler mittelviskos ist sowie eine Säurezahl von ca. 35, eine Aminzahl von ca. 150 mg KOH/g und einen Wassergehalt von < 2 % bei Verwendung in Mischgütern mit sauren Bestandteilen wie Mineralien aufweist.

24. Verwendung eines Haftvermittlers für Fasern nach einem der Ansprüche 1 bis 23, **dadurch gekennzeichnet, daß** der Haftvermittler die Funktion eines ggf. in einem Pellet vorgesehenen Bindemittels wie auch Wachs oder Bitumen mindestens zu einem Anteil zwecks Reduzierung des Bindemittelanteils bis zu dessen Ersatz übernimmt.

25. Verwendung eines Haftvermittlers für Fasern nach einem der Ansprüche 1 bis 24, **dadurch gekennzeichnet, daß** der Haftvermittler in einem Verfahren zur Herstellung von Bitumenmassen, die mit Füllfasern stabilisiertes Bitumen umfassen, eingesetzt wird.

26. Verwendung eines Haftvermittlers für Fasern nach einem der Ansprüche 1 bis 25, **dadurch gekennzeichnet, daß** der Haftvermittler in einem Verfahren zur Herstellung von Bitumenmassen, die mit Füllfasern stabilisiertes Bitumen umfassen, eingesetzt wird, bei dem der Bitumen fließfähig gemacht und zum Einmischen der Füllfasern in dieses fließfähige Bitumen ein die Füllfasern umfassendes, sich in dem fließfähigen Bitumen auflösendes und die Füllfasern in dem fließfähigen Bitumen verteilendes Granulat verwendet wird, welches ein Bindemittel aufweist, das in fließfähigem Bitumen seine Bindungswirkung verliert.

27. Verwendung eines Haftvermittlers für Fasern nach einem der Ansprüche 1 bis 26, **dadurch gekennzeichnet, daß** der Haftvermittler in einem Verfahren (zur Herstellung von Bitumen aufweisende Massen, bituminöse Mischgüter oder Asphaltmischgüter, insbesondere Splittmastixasphalt, offenporige Asphaltdeckschichten und hochstandfeste Asphaltbinder für Straßenbeläge, wie Asphaltbetone oder Asphaltragschichten) verwendet wird, bei dem Anteile von durch Fischer-Tropsch-Synthese gewonnenes Paraffin zugemischt werden.

28. Verwendung eines Haftvermittlers für Fasern nach einem der Ansprüche 1 bis 24 und 27, **dadurch gekennzeichnet, daß** der Haftvermittler in einem Verfahren (zur Herstellung von Bitumen aufweisende Massen, bituminöse Mischgüter oder Asphaltmischgüter, insbesondere Splittmastixasphalt, offenporige Asphaltdeckschichten und hochstandfeste Asphaltbinder für Straßenbeläge, wie Asphaltbetone oder Asphaltragschichten) verwendet wird, bei dem die Phasen Vormischen, Naßmischen und/oder Nachmischen ablaufen, wobei als Zuschlagstoffe eine als Trägersubstanz für Fischer-Tropsch-Paraffin ausgestaltete Fasern sind, die auch als Preßlinge formbar sind, und die in eine der Phasen Vormischen, Naßmischen und/oder Nachmischen zugegeben werden.

29. Verwendung eines Haftvermittlers für Fasern nach einem der Ansprüche 1 bis 24, 27 und 28, **dadurch gekennzeichnet, daß** der Haftvermittler in einem Verfahren (zur Herstellung von Bitumen aufweisende Massen, bituminöse Mischgüter oder Asphaltmischgüter, insbesondere Splittmastixasphalt, offenporige Asphaltdeckschichten und hochstandfeste Asphaltbinder für Straßenbeläge, wie Asphaltbetone oder Asphaltragschichten) verwendet wird, bei dem Mischvorgänge, z.B. wie auch Phasen des Vormischens, Naßmischens und/oder Nachmischens, ablaufen, wobei als Zuschlagstoffe eine als Trägersubstanz für Fischer-Tropsch-Paraffin ausgestaltete Fasern sind, die auch als Preßlinge formbar sind, wobei in mindestens einem Mischvorgang durch die mechanische, zerkleinernde Wirkung der Mineralien diese Fasern aufgerieben und weitgehend im Mischgut verteilt werden.

30. Verwendung eines Haftvermittlers für Fasern nach einem der Ansprüche 1 bis 29 **dadurch gekennzeichnet, daß** der Haftvermittler in einem Verfahren zur kombinierten Verwendung eines Systems von einem Weichmacher und einem Härter, welches System einer jeweiligen Mischung mit Ausbauasphalten zugegeben wird, eingesetzt wird.
